# EUROPEAN PATENT APPLICATION

(11) **EP 4 663 707 A1**
(43) Date of publication of application: **17.12.2025**
(21) Application number: 24181377.3
(22) Date of filing: 11.06.2024
(51) Int. Cl.: C09D 4/06, C08K 7/28, C08K 5/00, C08K 7/24

(54) **LIGHT-CURABLE COMPOSITION AND ASSEMBLY**

(71) Applicant: 3M Innovative Properties Company, Saint Paul, MN 55133-3427 (US)
(72) Inventor: Bieber, Pierre Reinhard, 41352 Korschenbroich (DE); Ohligs, Maximilian, 41468 Neuss (DE); Claussen, Kai Uwe, 40217 Düsseldorf (DE); Konietzny, Roman, 41366 Schwalmtal (DE); Pütz, Benjamin, 41453 Neuss (DE)
(74) Representative: Mathys & Squire

(57) **Abstract**

Provided is a light-curable composition useful as potting compositions in battery assemblies. The composition comprises, optionally, one or more monofunctional (meth)acrylate monomers, a crosslinker selected from multifunctional oligomeric (meth)acrylates, aliphatic urethane (meth)acrylates, aromatic urethane (meth)acrylates, polyester (meth)acrylates, and epoxy (meth)acrylates, one or more adhesion promoters selected from glycidyl (meth)acrylate, 2-hydroxyethyl (meth)acrylate acid phosphate, phosphonate ester-containing (meth)acrylic monomer, phosphate ester-containing (meth)acrylic monomer, silane, and (meth)acrylic acid. The composition further includes a photoinitiator, a flame retardant, and one or more hollow fillers.

## Description

### Field of the Invention

The present disclosure relates to light-curable compositions that can be useful in the production of battery assemblies.

### Background

EV batteries generally use cylindrical or prismatic cells enclosed in a rigid outer container. These can be stacked to form battery modules that can harness the power of large numbers of electrolytic cells. These electrolytic cells commonly include venting ports that help prevent damage to the outer container by equalizing internal and external pressures while releasing gases in the case of a thermal event, such as a thermal runaway event, within the battery. Such outgassing, however, can subject neighboring cells to exposure from hot gases and hot particles created by the thermal event. The lack of an interposing structure between cells also tends to result in facile heat transfer between cells which can result in a catastrophic outcome for the battery module.

To alleviate some of these technical problems, it is possible to incorporate a flowable potting composition into a battery assembly that partially or fully encapsulates the cells and is subsequently cured. This structure adds strength and also serves as a protective barrier that helps insulate cells from each other. In doing so, it is possible to localize damage to cells within a battery module induced by a thermal event.

Improvements in the EV battery potting solutions would provide greater efficiency and safety in battery production and ultimately contribute to the growth and sustainability of the EV market.

### Summary:

Technical challenges have been encountered with respect to known potting compositions. First, the dispensing of conventional two-part potting compositions onto a large number of cells presents significant manufacturing challenges, because dispensing mechanisms tend to foul over time due to premature curing of compositions. Second, these compositions can also interfere with the function of the venting ports, since coating these ports can lead to undesirable pressure buildup and explosive discharge of gases. Avoidance of the venting ports when applying the potting composition resolves this problem but also degrades its protective function, since it produces a gap in the coating coverage. A technical need remains for a potting solution that allows for rapid and efficient application on multiple cells without the risk of fouling of the dispensing unit, while ensuring venting ports to serve their function should a thermal event occur.

Provided is a one-part composition that can be used in coating various electrolytic cells used in electric vehicle batteries. The coating protects neighboring cells from hot particles and gases in case of thermal runaway events, while also allowing venting in the event of a catastrophic failure. The key advantage of this top potting resin is that it allows for unlimited open time, separating the dispensing step from the curing step, which reduces cycle times and allows for greater flexibility in the manufacturing process.

In a first aspect, a light-curable composition is provided. The light-curable composition comprises: optionally, one or more monofunctional (meth)acrylate monomers; a crosslinker selected from multifunctional oligomeric (meth)acrylates, aliphatic urethane (meth)acrylates, aromatic urethane (meth)acrylates, polyester (meth)acrylates, and epoxy (meth)acrylates; one or more adhesion promoters selected from glycidyl (meth)acrylate, 2-hydroxyethyl(meth)acrylate acid phosphate, phosphonate ester-containing (meth)acrylic monomer, phosphate ester-containing (meth)acrylic monomer, silane, and (meth)acrylic acid; a photoinitiator; a flame retardant; one or more hollow fillers, optionally comprised of glass bubbles, expanded polymeric bubbles, or a mixture thereof; and optionally, one or more solid fillers comprised of oxides, hydroxides, clays, fumed silica, or a mixture thereof.

In a second aspect, a method of making a battery assembly comprising a plurality of electrolytic cells having respective electrode surfaces, and a top plate disposed on the plurality of electrolytic cells, the top plate having a plurality of apertures registered with the electrode surfaces is provided. The method comprises: applying the light-curable composition through the plurality of apertures and onto the electrode surfaces; and curing the light-curable composition using actinic radiation to form a protective coating extending over the electrode surfaces.

In a third aspect, a method of making a battery assembly comprising a plurality of electrolytic cells, each having a respective electrode surface and venting port, is provided. The method comprises: for each electrolytic cell, applying the composition onto the electrode surface and/or venting port; and curing the light-curable composition using actinic radiation to form protective coatings that extend over the electrode surfaces and/or venting ports.

In a fourth aspect, a battery assembly made using any of the foregoing methods and compositions is provided.

The provided compositions and methods provide an efficient, cost-effective solution for batteries in electric vehicles and potentially many other applications, improving safety and performance. Compared with two-part compositions, the provided compositions and methods enable curing times of a few seconds in comparison to several minutes to hours. This greatly reduces production cycle times during the assembly of the battery or eliminates the need to store the battery stack for extended periods of time for curing or reaching a suitable handling strength. After being cured by light, the battery stack can be directly moved to the next production or mounting step. Accordingly, battery production lines can be designed to use less space or energy.

### Brief Description of the Drawings

FIG. 1 is a side cross-sectional view of a precursor to an electrolytic cell assembly.
FIGS. 2a-e are schematic views showing methods of disposing a light-curable composition onto the precursor of FIG. 1 according to various exemplary embodiments.
FIG. 3 is schematic view showing a method of curing a light-curable composition according to an exemplary embodiment.
FIGS. 4-6 are isometric views of electrolytic cell assemblies incorporating a light-curable composition according to various exemplary embodiments.

Repeated use of reference characters in the specification and drawings is intended to represent the same or analogous features or elements of the disclosure. It should be understood that numerous other modifications and embodiments can be devised by those skilled in the art, which fall within the scope and spirit of the principles of the disclosure. The figures may not be drawn to scale.

### DEFINITIONS

As used herein:
"allyl" refers to a functional group having the formula CH₂=CH-CH₂-.
"ambient conditions" means at 21°C and 101.3 kilopascals.
"ambient temperature" means 21°C.
"curable" refers to a composition that can be cured.
"cure" refers to the joining of polymer chains together by covalent chemical bonds, usually via crosslinking molecules or groups, to form a network polymer. Therefore, in this disclosure the terms "cured" and "crosslinked" may be used interchangeably. A cured or crosslinked polymer is generally characterized by insolubility but may be swellable in the presence of an appropriate solvent.
"halogen" refers to a halogen atom or one or more halogen atoms, including chlorine, bromine, iodine, and fluorine atoms or fluoro, chloro, bromo, or iodo substituents.
"(meth)acrylate group" refers to a functional group that is either an acrylate group of the formula CH₂=CH-C(O)O- or a methacrylate group of the formula CH₂=C(CH₃)-C(O)O-.
"molecular weight" refers to weight average molecular weight, unless otherwise indicated.
"oligomer" refers to a molecule that comprises at least two repeat units and that has a molecular weight less than its entanglement molecular weight; such a molecule, unlike a polymer, exhibits a significant change in properties upon the removal or addition of a single repeat unit.
"weight average molecular weight" is a parameter reflecting the weight fraction of individual polymer chains in a polymer sample and measured using known gel permeation chromatography (GPC) techniques.

### Detailed Description

As used herein, the terms "preferred" and "preferably" refer to embodiments described herein that can afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the invention.

As used herein and in the appended claims, the singular forms "a," "an," and "the" include plural referents unless the context clearly dictates otherwise. Thus, for example, reference to "a" or "the" component may include one or more of the components and equivalents thereof known to those skilled in the art. Further, the term "and/or" means one or all of the listed elements or a combination of any two or more of the listed elements.

It is noted that the term "comprises," and variations thereof do not have a limiting meaning where these terms appear in the accompanying description. Moreover, "a," "an," "the," "at least one," and "one or more" are used interchangeably herein. Relative terms such as left, right, forward, rearward, top, bottom, side, upper, lower, horizontal, vertical, and the like may be used herein and, if so, are from the perspective observed in the particular drawing. These terms are used only to simplify the description, however, and not to limit the scope of the invention in any way.

Reference throughout this specification to "one embodiment," "certain embodiments," "one or more embodiments" or "an embodiment" means that a particular feature, structure, material, or characteristic described relating to the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention.

### Light-curable Compositions

Provided are one-part, light-curable compositions capable of being deployed in potting solutions for electric vehicle batteries. In various embodiments, the composition includes one or more (meth)acrylate monomers; a crosslinker that is distinct from the one or more (meth)acrylate monomers, one or more adhesion promoters that is distinct from the one or more (meth)acrylate monomers and the crosslinker, a photoinitiator; and a flame retardant. In preferred embodiments, the composition further includes one or more fillers. Each of the foregoing components shall be examined below.

The one or more (meth)acrylate monomers are part of a base resin of the overall composition. Such monomers can include any useful acrylate or methacrylate that contain at least one ethylenically unsaturated bond and are capable of undergoing free radical polymerization.

Examples of useful ethylenically unsaturated compounds include acrylic acid esters, methacrylic acid esters, hydroxy-functional acrylic acid esters, hydroxy-functional methacrylic acid esters, and combinations thereof. Such free radically polymerizable compounds include mono-, di- or poly-(meth)acrylates (i.e., acrylates and methacrylates) such as, methyl (meth)acrylate, ethyl (meth)acrylate, isopropyl (meth)acrylate, n-hexyl (meth)acrylate, stearyl (meth)acrylate, allyl (meth)acrylate, glycerol tri(meth)acrylate, ethyleneglycol di(meth)acrylate, diethyleneglycol di(meth)acrylate, triethyleneglycol di(meth)acrylate, 1,3-propanediol di(meth)acrylate, trimethylolpropane tri(meth)acrylate, 1,2,4-butanetriol tri(meth)acrylate, 1,4-cyclohexanediol di(meth)acrylate, pentaerythritol tetra(meth)acrylate, sorbitol hex(meth)acrylate, tetrahydrofurfuryl (meth)acrylate, bis[1-(2-acryloxy)]-p-ethoxyphenyldimethylmethane, bis[1-(3-acryloxy-2-hydroxy)]-p-propoxyphenyldimethylmethane, ethoxylated bisphenolA di(meth)acrylate, and trishydroxyethyl-isocyanurate tri(meth)acrylate; (meth)acrylamides (i.e., acrylamides and methacrylamides) such as (meth)acrylamide, methylene bis-(meth)acrylamide, and diacetone (meth)acrylamide; urethane (meth)acrylates; the bis-(meth)acrylates of polyethylene glycols; and vinyl compounds such as styrene, diallyl phthalate, divinyl succinate, divinyl adipate and divinyl phthalate. Other suitable free radically polymerizable compounds include siloxane-functional (meth)acrylates.

In various embodiments, the provided composition can contain one or more one monofunctional (meth)acrylate monomers. Preferred monofunctional (meth)acrylic monomers include 2-ethylhexyl (meth)acrylate, dodecyl (meth)acrylate isomer blend, isodecyl (meth)acrylate, lauryl (meth)acrylate, isobornyl (meth)acrylate, isooctyl (meth)acrylate, and mixtures thereof.

The one or more monofunctional (meth)acrylate monomers can be present in an amount of from 1 percent to 50 percent, from 10 percent to 45 percent, from 20 percent to 40 percent, or in some embodiments, less than, equal to, or greater than 1 percent, 2, 5, 7, 10, 15, 20, 25, 30, 35, 40, 45, or 50 percent by weight, relative to the overall weight of the light-curable composition.

The composition further includes at least one crosslinker. These monomers are multifunctional and generally include at least two, three, or even more ethylenically unsaturated (e.g., free radically) polymerizable groups, such as (meth)acrylate groups. In preferred embodiments, the crosslinker is selected from multifunctional oligomeric (meth)acrylates, aliphatic urethane (meth)acrylates, aromatic urethane (meth)acrylates, polyester (meth)acrylates, and epoxy (meth)acrylates. Mixtures of the foregoing are also possible.

Examples of suitable crosslinking monomers with two ethylenically unsaturated (e.g. free radically) polymerizable groups include 1,2-ethanediol diacrylate, 1,3-propanediol diacrylate, 1,9-nonanediol diacrylate, 1,12-dodecanediol diacrylate, 1,4-butanediol diacrylate, 1,6-hexanediol diacrylate, butylene glycol diacrylate, bisphenol A diacrylate, diethylene glycol diacrylate, triethylene glycol diacrylate, tetraethylene glycol diacrylate, tripropylene glycol diacrylate, polyethylene glycol diacrylate, polypropylene glycol diacrylate, polyethylene/polypropylene copolymer diacrylate, polybutadiene diacrylate, neopentylglycol hydroxypivalate diacrylate modified caprolactone, and dimethacrylates of any of the foregoing diacrylates, and combinations thereof.

Examples of crosslinking monomers with three or four ethylenically unsaturated (e.g. free radically) polymerizable groups include trimethylolpropane triacrylate (e.g., commercially available under the trade designation TMPTA-N from Cytec Industries, Inc., Smyrna, GA and under the trade designation SR-351 from Sartomer, Exton, PA), pentaerythritol triacrylate (e.g., commercially available under the trade designation SR-444 from Sartomer), tris(2-hydroxyethylisocyanurate) triacrylate (e.g., commercially available under the trade designation SR-368 from Sartomer), a mixture of pentaerythritol triacrylate and pentaerythritol tetraacrylate (e.g., commercially available from Cytec Industries, Inc., under the trade designation PETIA with an approximately 1:1 ratio of tetraacrylate to triacrylate and under the trade designation PETA-K with an approximately 3:1 ratio of tetraacrylate to triacrylate), pentaerythritol tetraacrylate (e.g., commercially available under the trade designation SR-295 from Sartomer), di-trimethylolpropane tetraacrylate (e.g., commercially available under the trade designation SR-355 from Sartomer), and ethoxylated pentaerythritol tetraacrylate (e.g., commercially available under the trade designation SR-494 from Sartomer). Examples of suitable with five (meth)acryloyl groups includes dipentaerythritol pentaacrylate (e.g., commercially available under the trade designation SR-399 from Sartomer).

Higher functionality meth(acrylates) include tri-, tetra- or pentafunctional monomeric or oligomeric aliphatic, cycloaliphatic, or aromatic acrylates or methacrylates.

Examples of suitable aliphatic tri-, tetra- and pentafunctional (meth)acrylates include triacrylates and trimethacrylates of hexane-2,4,6-triol; glycerol or 1,1,1-trimethylolpropane; ethoxylated or propoxylated glycerol or 1,1,1-trimethylolpropane; and the hydroxyl-containing tri(meth)acrylates which are obtained by reacting triepoxide compounds, for example the triglycidyl ethers of said triols, with (meth)acrylic acid. It is also possible to use, for example, pentaerythritol tetraacrylate, bistrimethylolpropane tetraacrylate, pentaerythritol monohydroxytriacrylate or -methacrylate, or dipentaerythritol monohydroxypentaacrylate or -methacrylate. In some embodiments, tri(meth)acrylates comprise 1,1-trimethylolpropane triacrylate or methacrylate, ethoxylated or propoxylated 1,1,1-trimethylolpropanetriacrylate or methacrylate, ethoxylated or propoxylated glycerol triacrylate, pentaerythritol monohydroxy triacrylate or methacrylate, or tris(2-hydroxy ethyl) isocyanurate triacrylate. Further examples of suitable aromatic tri(meth)acrylates are the reaction products of triglycidyl ethers of trihydroxy benzene and phenol or cresol novolaks containing three hydroxyl groups, with (meth)acrylic acid.

Other examples of crosslinkers are (meth)acrylic functional oligomers and generally include at least two, three, or even more ethylenically unsaturated (e.g., free radically) polymerizable groups, such as (meth)acrylate groups. These (meth)acrylic functional oligomers can be aliphatic urethane (meth)acrylates, aromatic urethane (meth)acrylates, polyester (meth)acrylates, epoxy (meth)acrylates.

Multifunctional urethane (meth)acrylate crosslinkers are commercially available from Sartomer, Colombes France, under the trade designation CN9002, CN9012, CN9200, CN9213LV, CN9215, CN9245, CN9276, CN9301B80, CN963B80, CN964A85, CN965, CN966H90, CN9800, CN981, CN991, CN996, CN9196, CN970D60, CN9761 or CN992.

Multifunctional urethane (meth)acrylate crosslinkers are commercially available from Allnex, Frankfurt, Germany, under the trade designation EBECRYL. For instance, these can include EBECRYL 225, 230, 231, 242, 244, 246, 250, and 264.

Multifunctional polyester (meth)acrylate crosslinkers are commercially available from Sartomer, Colombes France under the trade designations SARBIO 7201, SARBIO 7202, CN203, CN2035, CN2295EU, CN2303EU, CN2505, CN2560, CN2565, CN2608A, CN2634, CN2917, CN704, CN736, CN790, CN890 and SB400.

Multifunctional polyester (meth)acrylate crosslinkers are commercially available from Allnex, Frankfurt, Germany under the trade designation EBECRYL. For instance, these include EBECRYL 571, 657, 809, 810, 812, and 838.

Multifunctional epoxy (meth)acrylate crosslinkers are commercially available from Sartomer, Colombes France, under the trade designation SARBIO 7107, CN104, CN112D60, CN113D70, CN122A80, CN131BEU, CN132, and CN2003EU. Other multifunctional epoxy (meth)acrylate crosslinkers are commercially available from Allnex, Frankfurt, Germany, under the trade designation EBECRYL. For instance, these include EBECRYL 605, 608, 3200, 3411, 3415, 3418, 3503, 3600, and 3700.

The crosslinker(s) can be present in an amount of from 2.5 percent to 70 percent, or in some embodiments, less than, equal to, or greater than 2 percent, 2.5, 3, 3.5, 4, 4.5, 5, 6, 7, 8, 9, 10, 12, 15, 17, 20, 25, 30, 35, 40, 45, 50, 55, 60, 65, or 70 percent by weight, relative to the overall weight of the light-curable composition.

The provided compositions further include one or more adhesion promoters, which are reactive compounds that improve the adhesive bond between the light-curable composition and a substrate. The adhesion promoter is commonly a relatively low molecular weight compound that contains at least one functional group reactive with the other reactive groups present in the reactive composition. Examples of suitable reactive groups include (meth)acrylate groups (co-reactive with free radically polymerizable groups) and epoxy groups (co-reactive with hydroxyl groups). These low molecular weight compounds can have number average molecular weights of less than 1,000 g/mol, or even less than 500 g/mol. Examples of suitable reactive adhesion promoters include the cycloaliphatic difunctional epoxy EPONEX brand 1510 commercially available from Momentive Specialty Chemicals, Columbus, Ohio. Additionally, hydroxyl-functional (meth)acrylate compounds and silane-functional (meth)acrylates can also be used as reactive adhesion promoters.

Particularly useful adhesion promoters include glycidyl (meth)acrylate, 2-hydroxyethyl (meth)acrylate acid phosphate, phosphonate ester-containing (meth)acrylic monomer, phosphate ester-containing (meth)acrylic monomer, silane, (meth)acrylic acid, and combinations thereof.

In a preferred embodiment, the adhesion promoter is a silane and is present in an amount of from 0.25 percent to 10 percent, or in some embodiments, less than, equal to, or greater than 0.25 percent, 0.5, 0.75, 1, 1.5, 2, 2.5, 3, 4, 5, 6, 7, 8, 9, or 10 percent by weight, relative to the overall weight of the light-curable composition.

Alternatively, the adhesive promoter can be a glycidyl (meth)acrylate, 2-hydroxyethyl (meth)acrylate acid phosphate, phosphonate ester-containing (meth)acrylic monomer, phosphate ester-containing (meth)acrylic monomer, silane, (meth)acrylic acid, or combination thereof, and present in an amount of from 0.5 percent to 20 percent, or in some embodiments, less than, equal to, or greater than 0.5 percent, 0.75, 1, 1.5, 2, 2.5, 3, 4, 5, 7, 10, 12, 15, 17, or 20 percent by weight, relative to the overall weight of the light-curable composition.

The provided compositions also include at least one photoinitiator used to photocure the composition. Photoinitiators of interest are capable of polymerizing free radically photopolymerizable compositions upon exposure to actinic radiation. Such compounds can include binary and tertiary systems. Typical tertiary photoinitiators include an iodonium salt, a photosensitizer, and an electron donor compound as described in U.S. Patent No. 5,545,676 (Palazzotto et al.). Iodonium salts include diaryl iodonium salts, e.g., diphenyliodonium chloride, diphenyliodonium hexafluorophosphate, and diphenyliodonium tetrafluoroboarate. Some preferred photosensitizers may include monoketones and diketones (e.g., alpha diketones) that absorb some light within a range of about 300 nm to about 800 nm (preferably, about 400 nm to about 500 nm) such as camphorquinone, benzil, furil, 3,3,6,6-tetramethylcyclohexanedione, phenanthraquinone and other cyclic alpha diketones. Preferred electron donor compounds include substituted amines, e.g., ethyl 4-(N,N-dimethylamino)benzoate.

Other suitable photoinitiators for polymerizing free radically photopolymerizable compositions include the class of phosphine oxides that typically have a functional wavelength range of about 380 nm to about 1200 nm. Certain phosphine oxide free radical initiators with a functional wavelength range of about 380 nm to about 450 nm include acyl and bisacyl phosphine oxides. Preferred photoinitiators can initiate free radical polymerization of the composition when exposed to actinic radiation having a wavelength of from 365 nm to 450 nm.

Commercially available phosphine oxide photoinitiators capable of free-radical initiation when irradiated at wavelength ranges of 365 nm to 450 nm include bis(2,4,6-trimethylbenzoyl)phenyl phosphine oxide (IRGACURE 819, Ciba Specialty Chemicals, Tarrytown, N.Y.), bis(2,6-dimethoxybenzoyl)-(2,4,4-trimethylpentyl)phosphine oxide (CGI 403, Ciba Specialty Chemicals), a 25:75 mixture, by weight, of bis(2,6-dimethoxybenzoyl)-2,4,4-trimethylpentyl phosphine oxide and 2-hydroxy-2-methyl-1-phenylpropan-1-one (IRGACURE 1700, Ciba Specialty Chemicals), a 1:1 mixture, by weight, of bis(2,4,6-trimethylbenzoyl)phenyl phosphine oxide and 2-hydroxy-2-methyl-1-phenylpropane-1-one (DAROCUR 4265, Ciba Specialty Chemicals), and ethyl 2,4,6-trimethylbenzylphenyl phosphinate (LUCIRIN LR8893X, BASF Corp., Charlotte, N.C.).

Other suitable photoinitiators capable of free-radical initiation when irradiated at wavelength ranges of 365 nm to 450 nm include, for example, 2,2-dimethoxy-1,2-diphenylethan-1-one (OMNIRAD 651), sold by IGM Resins B.V., Waalwijk, Netherlands, or 2-hydroxy-2-methyl-1-phenylpropanone (OMNIRAD 1173 obtained from IGM Resins), or oligo[2-hydroxy-2-methyl-1-[4- (1-methylvinyl)phenyl]propanone] obtained from IGM Resins under the trade designation ESACURE KIP 150, and difunctional alpha-hydroxy ketones obtained from IGM Resins under the trade designations ESACURE ONE and ESACURE KIP 160 (2-hydroxy-1-[4-[4-(2-hydroxy-2-methylpropionyl)phenoxy] phenyl]-2-methylpropanone). A difunctional alpha-hydroxy ketone refers to a compound that includes two alpha-hydroxy ketone groups. A multifunctional alpha-hydroxy ketone refers to a compound that includes two or more alpha-hydroxy ketone groups.

It is often beneficial to pair a photoinitiator with curing light source that enables a depth of cure sufficient to cure the composition fully when used to a fill a cavity or space within an assembly. For certain applications, the provided composition advantageously provide a depth of cure of at least 5 millimeters, or in some embodiments, less than, equal to, or greater than 0.5 millimeters, 1, 1.5, 2, 2.5, 3, 3.5, 4, 4.5, or 5 millimeters when exposed to actinic radiation having a monomodal wavelength distribution centered at 450 nm under ambient conditions.

The photoinitiator can be present in any amount sufficient to provide the desired rate of cure. For a photoinitiator, this amount will be dependent in part on the light source, the thickness of the composition to be exposed to actinic radiation, and the extinction coefficient of the photoinitiator. Commonly, the photoinitiator is present in an amount of from 0.01 percent to 5 percent, or in some embodiments, less than, equal to, or greater than 0.01, 0.02, 0.05, 0.07, 0.1, 0.2, 0.3, 0.4, 0.5, 0.7, 1, 1.5, 2, 2.5, 3, 3.5, 4, 4.5, or 5 percent, 2.5, 3, 3.5, 4, 4.5, 5, 6, 7, 8, 9, 10, 12, 15, 17, 20, 25, 30, 35, 40, 45, 50, 55, 60, 65, or 70 relative to the overall weight of the light-curable composition.

The composition can also contain one or more flame retardants to render the cured composition non-flammable. Incorporation of a flame retardant assists in preventing a thermal event in an EV battery from starting a fire that could potentially endanger vehicle occupants. Useful flame retardants include aluminum hydroxide (Al(OH)₃), which releases water vapor upon heating, effectively cooling the matrix material and suppressing the flame. Another option is magnesium hydroxide (Mg(OH)₂), which operates similarly to aluminum hydroxide but also releases water vapor and carbon dioxide, further enhancing its flame-retardant properties. Additionally, antimony trioxide (Sb₂O₃) is commonly used as a synergist with other flame retardants, improving their effectiveness. Other useful flame retardants include other metal hydroxides, borate, huntite, hydromagnesite, carbonate, talc, halogenated flame retardants, non-halogenated flame-retardants such as phosphorus-based flame retardants, expandable graphite, clay, and combinations thereof.

Aluminum hydroxide and magnesium hydroxide are commercially available from Martinswerk-Huber Minerals, Germany, under the trade designations MARTINAL, HYDRAL, HYMOD, MOLDX, MAGNIFIN, ZEROGEN and VERTEX.

Other suitable non-halogenated flame retardants are for instance commercially available from Clariant, Germany. Phosphorous-based flame retardants using ammonium polyphosphates are available from Clariant Germany and sold under the trade designation EXOLIT AP, EXOLIT AP422, EXOLIT AP462, EXOLIT AP740, EXOLIT AP750, EXOLIT AP765, and EXOLIT AP766. Another phosphorus-based flame retardant is red phosphorus commercially available from Clariant under the trade designation EXOLIT RP, EXOLIT RP 607 and Red Phosphorus HB801. Another class of phosphorus based flame retardants is based on organo phosphorus compounds. These organo phosphorous compounds are commercially available from Clariant, Germany under the trade designations EXOLIT OP, EXOLIT OP 930, EXOLIT OP 1230, EXOLIT OP 550, and EXOLIT OP 560.

Other non-halogenated flame retardants are available from Lanxess, Germany under the trade designation Amgard, Disflamoll, Levagard or Reofos; from Buddenheim, Germany under the trade designation BUDIT.

In a preferred embodiment, the cured composition provides a V0 flame retardancy rating. A V0 rating is demonstrated when a given material is ignited in a vertical position and burning stops within 10 seconds after the ignition source is removed. According to another test, the provided compositions can be capable of providing thermal protection when subjected to a 1100°C torch flame for more than 5 seconds, more than 10 seconds, or even more than 20 seconds.

Particle size can be an important consideration in incorporating a flame retardant. Generally, smaller particle sizes ranging from 1 to 10 micrometers are preferred as they provide better dispersion and surface area for flame suppression. However, larger particle sizes can be used in certain applications where improved mechanical properties are desired. In various embodiments, the median particle size can be from less than, equal to, or greater than 1 micrometer, 2, 3, 4, 5, 6, 7, 8, 9, or 10 micrometers.

The flame retardant can be present in an amount of from 15 percent to 70 percent, or in some embodiments, less than, equal to, or greater than 15 percent, 17, 20, 25, 30, 35, 40, 45, 50, 55, 60, 65, or 70 percent by weight, relative to the overall weight of the light-curable composition.

The provided compositions can also include one or more suitable fillers that are distinct from foregoing flame retardants. Useful fillers include hollow fillers. For example, hollow fillers include microcapsules (i.e., capsules that typically have a diameter less than 10 micrometers), glass bubbles, expanded polymeric bubbles, ceramic bubbles, and combinations thereof. Exemplary materials are disclosed, for example, in U.S. Patent No. 4,303,730 (Torobin), U.S. Patent No. 4,336,338 (Downs et al.), U.S. Patent No. 5,045,569 (Delgado), and U.S. Patent No. 5,861,214 (Kitano et al.).

Exemplary hollow glass microspheres ("HGM") include those marketed by 3M Co. (St. Paul, MN) under the trade designation "3M GLASS BUBBLES" (e.g., grades - K1, K15, S32, K37, S38, S38HS, S38XHS, K46, D32/4500, H50/10000, S60, S60HS, and iM30K); glass bubbles marketed by Potters Industries, Valley Forge, PA, (an affiliate of PQ Corporation) under the trade designations "Q-CEL HOLLOW SPHERES" and "SPHERICEL HOLLOW GLASS SPHERES" and hollow glass particles marketed by Silbrico Corp., Hodgkins, IL under the trade designation "SIL-CELL."

Exemplary hollow ceramic particles include aluminosilicate particles extracted from pulverized fuel ash collected from coal-fired power stations (i.e., cenospheres). Useful cenospheres include those marketed by Sphere One, Inc., Chattanooga, TN, under the trade designation "EXTENDOSPHERES HOLLOW SPHERES" (e.g., grades SG, MG, CG, TG, HA, SLG, SL-150, 300/600, 350 and FM-1); and those marketed by 3M Company under the trade designation "3M HOLLOW CERAMIC MICRO SPHERES" (e.g., grades G-3125, G-3150, and G-3500).

Generally, thinner walled, lower density hollow inorganic microspheres will result in lower thermal conductivities and better thermal barrier properties. The thickness of the shells may vary as suppliers try to balance low density (typically provided by thinner walls) with high crush strength as may be required to provide the desired compression performance, especially resilience (typically provided by thicker walls). In some cases, the core of the hollow microspheres comprises at least 50 percent, 60, 70, 80, or even 90 percent of the diameter of the hollow microspheres.

Generally, the hollow inorganic microspheres have an average diameter of no greater than 500 micrometers, e.g., no greater than 400 micrometers. For example, in some cases, the microspheres have an average diameter of no greater than 250 micrometers, for example, no greater than 150, no greater than 100 micrometers, or even no greater than 50 micrometers. Typically, the microspheres have an average diameter of at least 10 or 20 micrometers. For example, in some cases, the microspheres have an average diameter of 10 to 400 micrometers, e.g., 10-300, 20 to 250, 20 to 150 or even 20 to 70 micrometers.

For some applications, lower density hollow microspheres may be selected to lower the thermal conductivity and improve the thermal barrier properties composition. Generally, the microspheres have an average true density of no greater than 1 gram per cubic centimeter. However, even lower densities are preferred, for example, no greater than 0.8, 0.6 or even no greater than 0.4 grams per cubic centimeter. Exemplary hollow glass microspheres have an average true density of 0.1 to 0.8, 0.1 to 0.6, 0.1 to 0.5 or 0.2 to 0.5 grams per cubic centimeter.

In another embodiment, the hollow particles are organic in nature, comprising a hollow sphere with a polymeric shell. In one embodiment, these organic particles are derived from expandable polymeric microspheres. Such expandable microspheres generally include a thermoplastic polymer shell and a core material in the form of a gas, liquid, or a combination (e.g., propane, butane, pentane, isobutene, neopentane, and combinations thereof). Upon heating, the shell softens and core expands, causing the shell to expand without breaking. Upon cooling, the shell re-hardens, and the expandable microsphere remains expanded. Examples of suitable thermoplastic resins which may be used as the shell include acrylic and methacrylic acid esters such as polyacrylate; acrylate-acrylonitrile copolymer; and methacrylate-acrylic acid copolymer. Vinylidene chloride-containing polymers such as vinylidene chloride-methacrylate copolymer, vinylidene chloride-acrylonitrile copolymer, acrylonitrile-vinylidene chloride-methacrylonitrilemethyl acrylate copolymer, and acrylonitrile-vinylidene chloride-methacrylonitrile-methyl methacrylate copolymer may also be used. Useful expandable microspheres include microspheres available from Henkel Corp., Plainfield, Illinois, under the trade designation MICROPEARL (e.g., DocuSign Envelope ID: B430AB41-CFD5-4309-A533-EEEB088E8EF1 10 in grades F30, F80, and F 100); Matsumoto Yushi-Seiyaku Co. Ltd., Osaka, Japan under the designations "F-65", "FN-100S", and "FN-100" and microspheres marketed by Akzo-Nobel under the trade designation EXPANCEL (e.g., as EXPANCEL 051 DU 40, EXPANCEL 461 DU 20, EXPANCEL 920 DE 40 AND EXPANCEL 043 DU 80).

In one embodiment, the expanded hollow organic particles of the present disclosure have a diameter of at least 5, 10, or even 20 micrometers and at most 40, 60, 80, 100, 120, or even 150 micrometers. Non-hollow (i.e., solid) fillers can also be useful in the provided compositions. Examples of non-hollow fillers can be made from quartz (i.e., silica, SiO₂); nitrides (e.g., silicon nitride); glasses and fillers derived from, for example, Zr, Sr, Ce, Sb, Sn, Ba, Zn, and Al; feldspar; borosilicate glass; kaolin; talc; zirconia; titania; low Mohs hardness fillers such as those described in U.S. Patent No. 4,695,251 (Randklev); and submicron silica particles (e.g., pyrogenic silicas such as those available under the trade designations AEROSIL, including "OX 50," "130," "150" and "200" silicas from Degussa Corp., Akron, Ohio and CAB-O-SII, M5 silica from Cabot Corp., Tuscola, Ill.). Examples of suitable organic filler particles include filled or unfilled pulverized polycarbonates, polyepoxides, and the like.

Preferred non-acid-reactive filler particles are quartz (i.e., silica), submicron silica, zirconia, submicron zirconia, and non-vitreous microparticles of the type described in U.S. Patent No. 4,503,169 (Randklev). Mixtures of these non-acid-reactive fillers are also contemplated, as well as combination fillers made from organic and inorganic materials.

The composition preferably includes one or more fillers (distinct from the one or more flame retardants) in the amount of from 1 percent to 40 percent, or in some embodiments, less than, equal to, or greater than 1 percent, 2, 3, 4, 5, 7, 10, 15, 20, 25, 30, 35, or 40 percent by weight, relative to the overall weight of the composition.

### Battery Assemblies and Methods

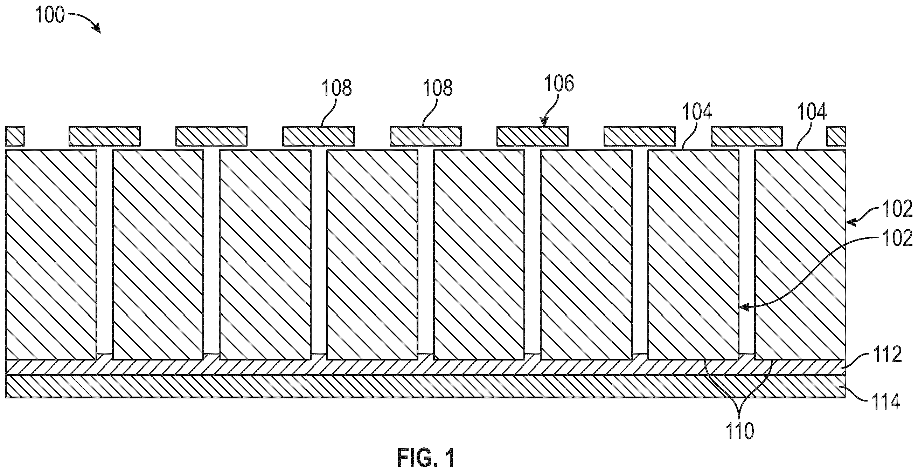

The provided light-curable compositions can be advantageously deployed as protective coatings in various applications, including the battery assemblies illustrated in FIGS. 1-5.

A precursor to a battery assembly is shown in FIG. 1 and hereinafter referred to by the numeral 100. The assembly 100 is comprised of a plurality of electrolytic cells 102. Each cell 102 includes a positive electrode surface 104 located along a top major surface of the assembly 100. Extending across the top major surface of the assembly 100 is a top plate 106. The top plate 106 has a generally planar configuration and a plurality of apertures 108 that are registered with the electrode surfaces 104 of the cells 102. Each cell 102 also includes a negative electrode surface 110, which can be on either the same or opposite end of the cell 102 relative to the positive electrode surface 104, with the latter shown in FIG. 1. While not explicitly shown in FIG. 1, the positive and negative electrode surfaces 104, 110 are coupled to common electrical conductors known as busbars. Use of busbars provides an efficient way to combine the power of the multiple cells 102 in parallel within the assembly 100.

Located along the negative electrode surface 110 is an adhesive 112, which bonds the plurality of cells 102 to a bottom plate 114. The adhesive 112 and bottom plate 114 are not particularly limited. In one advantageous embodiment, these structures enable wicking of heat away from the cells 102 in the case of a thermal event. For example, the adhesive 112 can be a thermally-conductive adhesive and the bottom plate 114 can be a cooling plate.

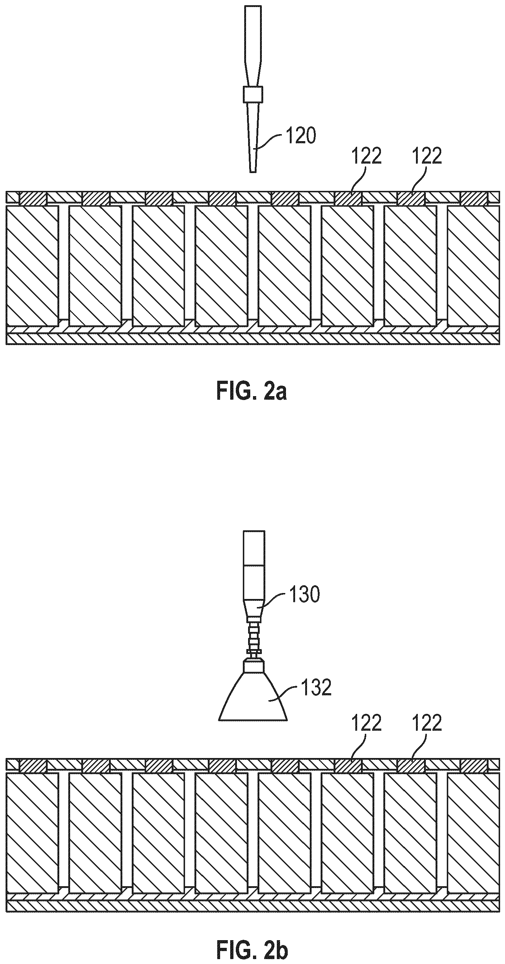

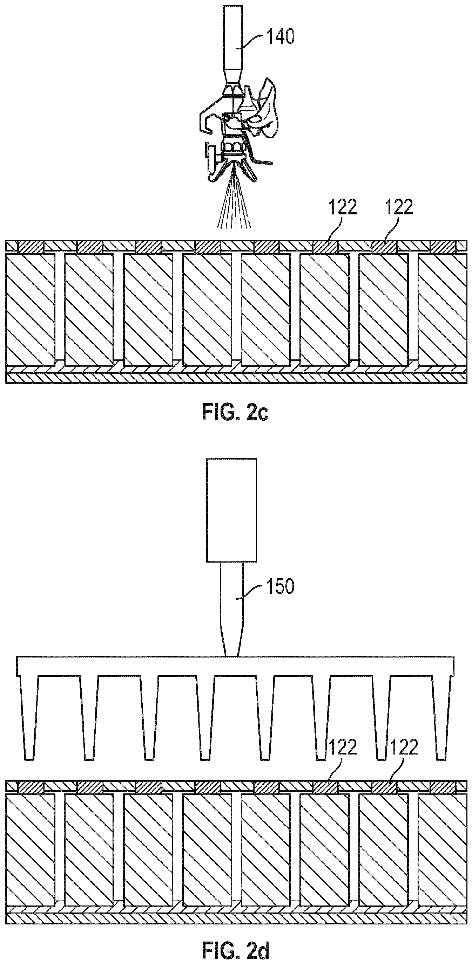

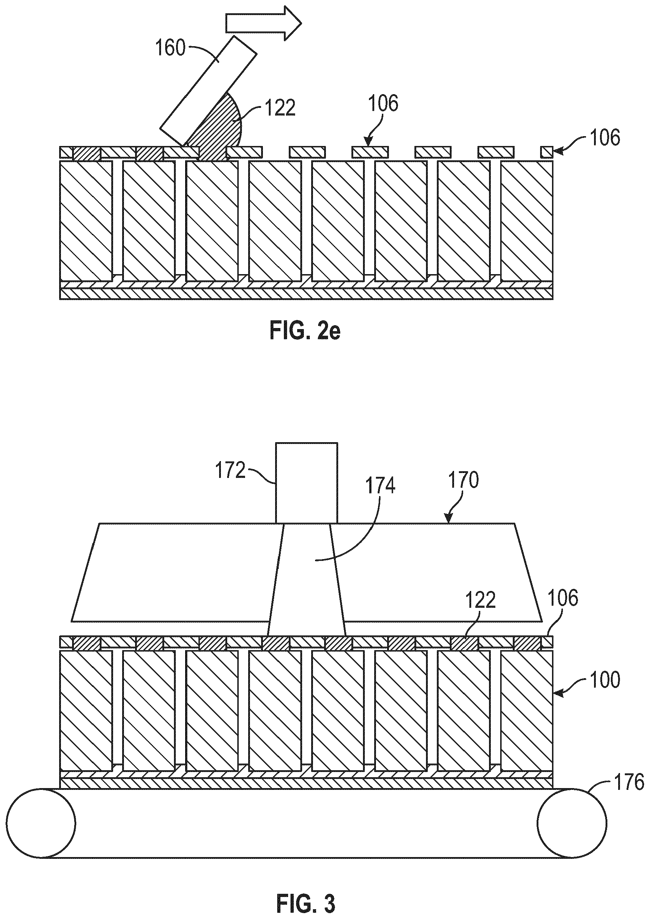

FIGS. 2a-2e illustrate alternative methods that can be used to deploy a light-curable composition as a potting solution on the precursor assembly 100. FIG. 2a shows a single nozzle configuration, where a nozzle 120 is used to dispense and deposit the light-curable composition 122 (such as described in the foregoing subsection) through the apertures 108 and onto the positive electrode surfaces 104, as shown. FIG. 2b shows an alternative configuration in which a slot die 132 extrudes a flat coating onto the top plate 106 such that the composition 122 is deposited onto the electrode surfaces 104. FIG. 2c shows the same effect obtained using a spray coating mechanism 140 to deposit the composition 122 onto the electrode surfaces 104. FIG. 2d shows a multi-channel dispensing unit 150 used to deposit the light-curable composition 122 onto the electrode surfaces 104. FIG. 2e shows a doctor blade 160 being used to coat the electrode surfaces 104. Preparation is carried out by applying some amount of the composition 122 collectively onto the top plate 106 and electrode surfaces 104 (optionally using any of the coating methods of FIGS. 2a-2d). Then, a wiping motion of the doctor blade 160 can form a rolling bank of the composition 122, while urging the same through the apertures and onto the electrode surfaces, as shown. Use of a doctor blade 160, as shown, can be effective in removing excess composition 122 residing above the top plate 106 to provide a planar top surface.

Overall, the composition can be applied onto the electrode surfaces and/or venting ports using any suitable method known in the art, which includes use of a doctor blade, single dispenser, multichannel dispenser, spraying, dipping, or extrusion coating.

FIG. 3 shows curing of the composition 122 after it is deposited onto the electrode surfaces. In this method, the curing station 170 is positioned over the assembly 100, as shown. The curing station 170 includes a radiation source 172, that emits actinic radiation 174 directly onto the top plate 106 and composition 122, thereby curing the composition 122 *in situ.*

As shown, the assembly 100 is fixtured to a conveyor belt 176 and translated horizontally to allow the composition 122 to be cured progressively across the length of the top plate 106. It is understood that the source 172 can emit radiation 174 over any width dimension perpendicular to the page in FIG. 3, thereby enabling composition 112 disposed over an entire row of cells to be cured at one time. Where the width dimension is less than the width of the assembly 100, multiple scans could be used.

Curing time can vary depending on the thickness of the coated composition 112. In some embodiments, the exposure time to actinic radiation required to cure the composition can be as low as 60 seconds, 50, 40, 30, 20, 15, 10 or even 5 seconds.

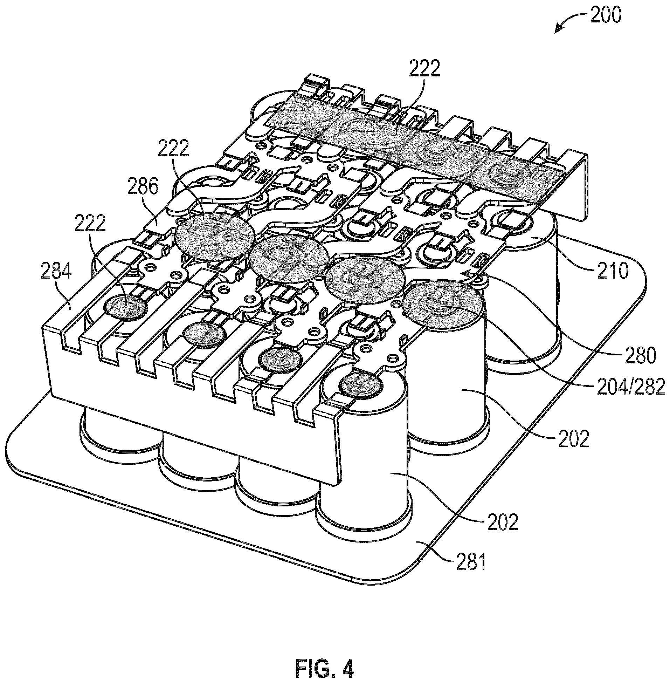

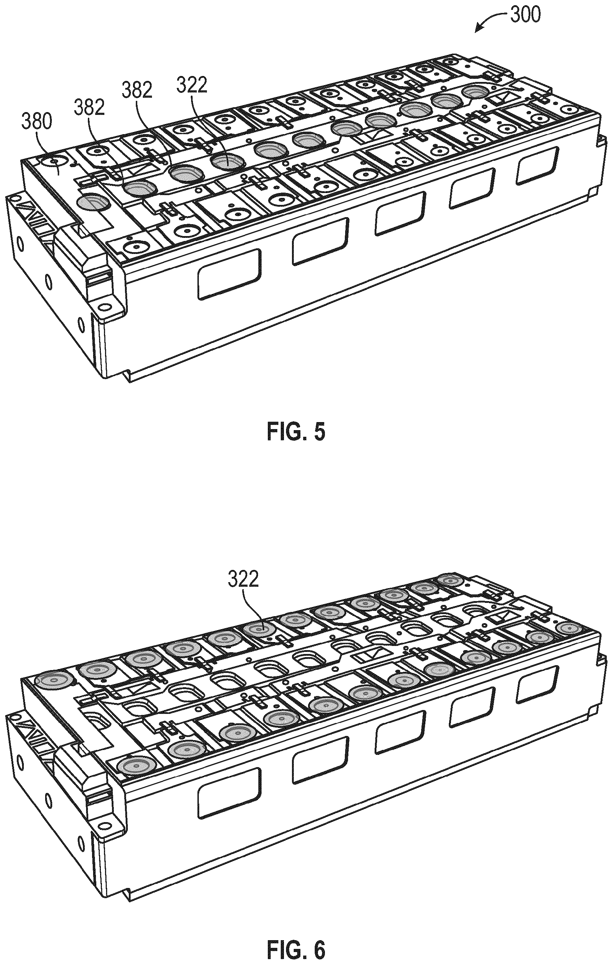

FIGS. 4 and 5 show exemplary electrolytic cell assemblies for two different battery configurations-a cylindrical cell assembly 200 and a prismatic cell assembly 300, respectively. While not explicitly illustrated herein, the provided light-curable compositions can also be applied to pouch cells, or any other type of cell used in a battery module that requires protection against thermal events.

In FIG. 4, the assembly 200 includes a plurality of cells 202, as shown, secured between a top plate 280 extending across the top major surface of the cells 202 and a bottom plate 281 extending across a bottom major surface of the cells 202. Venting port 282 is incorporated into the positive electrode surface 204, while a negative electrode surface 210 has a generally annular shape and extends around the positive electrode surface 204. The top plate 280 is subdivided into separate sections 284, 286 that separately contact the positive and negative electrode surfaces 204, 210. While not visible in the figure, the sections 284, 286 contain electrical conductors conveying electrical current to respective busbars consolidating power generated by the assembly 200. A cured composition 222 is disposed on the top plate 280 in a coating pattern that extends over the electrode surfaces 204, 210 and venting ports 282. The composition 222 can be applied and cured using any of the methods described above.

While not shown in the figures, it is also possible to coat the entire exposed major surface of the top plate 280 with the composition 222 and cure said composition 222 to obtain the finished assembly.

In FIG. 5, the assembly 300 bearing similarities to and differences from the prior embodiment. The assembly 300 includes a plurality of cells (not visible in FIG. 5) and a top plate 380 extending over the plurality of cells. The top plate 380 includes electrical conductors that contact the positive and negative electrode surfaces and route the electrical current to respective busbars. Venting ports 382 are present on the top surface of the cells and are electrically isolated from the electrical conductors in the top plate 380. A cured composition 322 is disposed on the venting ports 382. In an alternative embodiment, FIG. 6 shows the assembly 300 with a composition 322 is disposed on areas of the top plate 380 corresponding to the electrode surfaces.

Applying and then curing a thick layer of the light-curable composition onto the electrode surface and/or venting port of an electrolytic cell affords a protective coating that can mitigate damage and risks associated with thermal runaway in lithium ion batteries commonly used in electric vehicles and various other applications. At the same time, the protective layer can be engineered to fracture or delaminate in a controlled manner at a sufficiently high pressure and allow release of pressure resulting from a thermal event, generally caused by an exothermic chain reaction within a cell. The protective layer protects neighboring cells from heated gases and the ejection of hot particles that could damage the battery module and allowing the thermal event to propagate.

To allow for proper venting in the case of a thermal event, the cured composition can have a burst pressure that is constrained by certain upper limits. For example, the burst pressure can be at most 200 kilopascals, at most 180 kilopascals, or at most 160 kilopascals. Burst pressure is also related to the dimensions of the cured composition when disposed on the cells. The thickness of the cured composition can be from 0.2 millimeters to 10 millimeters, or in some embodiments, less than, equal to, or greater than, 0.02 millimeters, 0.3, 0.4, 0.5, 0.7, 1, 1.5, 2, 2.5, 3, 4, 5, 6, 7, 8, 9, or 10 millimeters.

### EXAMPLES

### Materials

The materials used in these Examples are listed in Table 1 below:

**Table 1. Materials**

| **Abbreviation** | **Description** | **Source** |
|---|---|---|
| 2EHA | 2-ethylhexyl acrylate | BASF SE, Ludwigshafen, Germany |
| ATH | Aluminum trihydroxide, sold under the trade designation TM 3719 | J.M. Huber, Edison, NJ, U.S.A. |
| AA | Acrylic acid | ThermoFisher Scientific, Waltham, MA, U.S.A. |
| DDAIB | Dodecyl acrylate isomer blend, prepared as described in U.S. Patent No. 9,102,774 (Clapper et al.). | 3M Company, St. Paul, MN, U.S.A. |
| CN9002 | Urethane diacrylate oligomer sold under the trade designation CN9002 | Arkema S.A., Columbes, France |
| CN991 | Urethane diacrylate oligomer sold under the trade designation CN991 | Arkema S.A. |
| CN965 | Urethane diacrylate oligomer sold under the trade designation CN965 | Arkema S.A. |
| CN9210 | Urethane diacrylate oligomer sold under the trade designation CN9210 | Arkema S.A. |
| SR610 | Polyethylene Glycol 600 Diacrylate sold under the trade designation SR610 | Arkema S.A. |
| SR9003 | Propoxylated 2 Neopentyl Glycol Diacrylate sold under the trade designation SR9003 | Arkema S.A. |
| E065-135 | Expanded polymeric bubbles, density of 0.065 g/cm³ | Chase Corporation, Westwood, MA, U.S.A. |
| HDDA | 1,6-hexanediol diacrylate | Arkema S.A. |
| O-819 | Norrish Type II Photoinitiator sold under the trade designation Omnirad 819 | IGM Resins B.V., Waalwijk, Netherlands |
| Camphorquinone | Norrish Type II Photoinitiator | Sigma Aldrich, St. Louis, Missouri, U.S.A. |
| Ethyl-4-(dimethylamino) benzoate | Amine Synergist | Sigma Aldrich |
| K15 | Glass bubbles, density of 0.15 g/cm³ | Chase Corporation |

### Test Methods

### Burst Pressure Test Method

The burst pressure was determined by clamping the cured film in a burst fixture and applying pressure on one side of the film such as described in following scheme. The applied pressure was 200 kPa, the time to burst the top potting film was recorded. If the pressure was not sufficient, the pressure was increased in 50 kPa increments until bursting occurred.

### Tensile Test

Tensile elongation measurements were performed according to ISO 527 by stamping out dog bone specimens from cured plates of the light-curable composition. The dog bone specimens had a total length of 115 mm, a width of 25 mm and an inner width of 6 mm. This test was performed with a Zwick tensile testing equipment at a speed of 50 mm/min.

### Thermal Conductivity

The thermal conductivity of the cured films was determined according to ASTM D5470. The thermal conductivity of the cured film was measured at ambient temperature at a pressure of 100 kPa.

### Flammability Test

Flammability of the cured film was tested according to UL94. This test was performed with a vertical burning test set up using a 75 mm (width) by 150 mm (length) sample according to UL94 (ASTM D 4804 or ISO 9773). The flame was applied centrally to the middle point of the bottom edge of the specimen so that the burner is 10 mm below the point of the lower end of the specimen. The burner maintains the flame at this position for 10 seconds. Afterwards the burner was removed and the time for ignition, the duration of burning and flaming particles or drops are documented. Additionally, a second pass with burner was applied if the material did not ignite or burn.

### Hardness Test

Shore A Hardness of a cured coating was measured according to DIN EN ISO 868.

### Rheometric testing

The flow curve of the uncured potting resin was determined using a parallel plate rheometer fixture. The shear rate was varied at ambient conditions from 0.1 s⁻¹ to 100 s⁻¹.

### Adhesion Tests

**Pull out Test.** Adhesion was characterized according to one failure mode using an adhesion pull out test, performed according to ASTM 4541 using a PosiTest AT adhesion tester from Defelsko Corporation, Ogdensburg, NY, U.S.A.. DP8005 SCOTCHWELD brand Structural Plastic Adhesive by 3M Company was used to bond an aluminum dolly to the top potting coating. The force required to break the bond between the 20-mm diameter dolly and the cured coating was measured in megapascals (MPa).

**Bend Test.** Adhesive failure can also be investigated on an aluminum substrate by filling 3 mm of a potting resin in an aluminum cup and curing the resin for 30 seconds with 450-nm LED light at a distance of 60 mm from the source. The coating was then subjected to a bending force until fracture occurred, and the observed failure mode was recorded as being either adhesive or cohesive in nature.

**Coupon Test.** Adhesion to PA6 (Polyamide 6) was determined by coating a 1.5-mm thick layer of potting resin to a PA6 substrate. A border was created around the coupon by applying a 1.5-mm adhesive-backed tape (PT1500 Acrylic Foam Tape, 3M Company) to avoid resin dripping. The resin was then cured for 30 seconds with 450nm LED light at a distance of 60mm from the source. Pull off force was then determined according to ASTM 4541.

### Maximum depth of cure

The absorption spectrum of OMNICURE 819 shows light absorption at wavelengths around 450 nm. The maximum depth of cure of the light curing potting resins filled with different filler combinations was determined by filling the respective compound in a plastic cup. The cups were placed under the LED lamp at a distance of 60 mm from the LED source and irradiated for 30 seconds at 100% power (1400 mW/cm²). The cups were then cut open and the thickness of the cured material was measured using a thickness gauge.

### Maximum curing temperature

The maximum curing temperature of Ex 9 has been determined by applying a 3-mm thick coating onto a 1mm thick aluminum panel delimited by a 3mm high PMMA border. A thermocouple was placed on the aluminum plate. The panel was then placed under the 450 nm LED source at 60mm and cured for 15 s at 100% power.

Determination of maximum curing temperature was obtained by 1) positioning the thermocouple on the aluminum substrate, 2) applying a 3 mm thick top potting coating, and 3) observing the maximum temperature reached after 15 s light exposure.

### Torch test

In this test, a butane welding lamp was used to simulate the thermal exposure of the top potting material to thermal event conditions. To simulate a battery fire, a 1 100°C torch flame was applied to a coating of the cured composition for 9 to 20 seconds.

### Examples EX-1 to EX-9

The compositions for Examples EX-1 to EX-9 are shown in Table 2 below. Potting resins were prepared by mixing the acrylates and the photoinitiator 0-819 in a speed mixer. Fillers were subsequently added and the composition mixed in a speed mixer at 3000 rpm for 30 s.

**Table 2. Composition of potting resins and selected properties.**

| | EX-1 | EX-2 | EX-3 | EX-4 | EX-5 | EX-6 | EX-7 | EX-8 | EX-9 |
|---|---|---|---|---|---|---|---|---|---|
| CN9002 | 50 | 50 | 50 | 50 | 50 | 50 | 50 | 50 | 50 |
| 2EHA | 50 | 50 | 50 | 50 | 50 | 50 | 50 | 50 | 50 |
| AA | 2 | 2 | 2 | - | 8 | 2 | 2 | 2 | 2 |
| ATH | - | - | 200 | 50 | 100 | 150 | 200 | 150 | 200 |
| E065-135 | - | - | - | - | - | - | - | - | - |
| K15 | - | 16 | - | 16 | 16 | 10 | 10 | 16 | 16 |
| 0-819 | 1 | 1 | 1 | 1 | 1 | 1 | 1 | 1 | 1 |
| Total | 103 | 119 | 303 | 167 | 225 | 263 | 313 | 269 | 319 |
| Volume% ATH | 0 | 0 | 45 | 9.1 | 16.7 | 27.1 | 33.1 | 23.1 | 28.6 |
| Volume% K15 | 0 | 51.2 | 0 | 46.5 | 42.7 | 28.9 | 26.5 | 39.4 | 36.6 |
| Calculated density, g/cm³ | 1 | 0.57 | 1.64 | 0.74 | 0.88 | 1.14 | 1.24 | 0.99 | 1.09 |
| Viscosity @0.1 s⁻¹, Pa-s | Low | 7.6 | 25.3 | 5.1 | 21.3 | 24.2 | 49.4 | 41.0 | 89.0 |
| Viscosity @1 s⁻¹, Pa-s | Low | 7.4 | 21.2 | 4.9 | 19.4 | 8.1 | 14.0 | 15.9 | 30.3 |
| Viscosity @10 s⁻¹, Pa-s | Low | 7.3 | 17.8 | 4.6 | 17.4 | 5.2 | 8.0 | 11.1 | 18.1 |

The top potting resins were coated on a PET liner with a knife coater and a gap of 2 mm. The top potting resins were cured by LED light exposure using an LED light chamber (Opsytec Dr. Goebel UV-LED Serie L with a LED source having a wavelength of 450nm) for 30 seconds at 100% power (1400mW/cm²). The distance from the LED Source to the sample was 60mm. After 30 seconds of exposure the coatings were fully cured and resulted in a solid resin plate.

Burst behavior, tensile strength, elongation at break, thermal conductivity and UL94 flammability were measured and summarized in Table 3 below:

**Table 3. Performance properties after curing.**

| | EX-1 | EX-2 | EX-3 | EX-4 | EX-5 | EX-6 | EX-7 | EX-8 | EX-9 |
|---|---|---|---|---|---|---|---|---|---|
| Burst pressure, kPa | - | - | - | - | - | 200 | 200 | 200 | 200 |
| Time to burst, s | - | - | - | - | - | 5 | 10 | 4 | 4 |
| Tensile strength, MPa | 0.4 | 0.24 | 0.64 | 0.35 | 0.42 | 0.75 | 0.99 | 0.79 | 1.04 |
| Elongation at break, % | 133 | 19 | 58 | 34 | 22 | 10 | 6 | 4 | 4 |
| Thermal conductivity, W/(m-K) | 0.19 | 0.11 | 0.59 | 0.17 | 0.23 | 0.34 | 0.48 | 0.31 | 0.42 |
| UL94 burn time after 1^{st} pass, s | burned | burned | 0 | burned | burned | 1 | 0 | 2 | 0 |
| UL94 burn time after 2^{nd} pass, s | - | - | 1 | - | - | 4 | 0 | 0 | 4 |
| UL94 rating | burned | burned | V0 | burned | burned | V0 | V0 | V0 | V0 |

From Table 3, we can see that LED cured top potting coating filled with ATH amounts >150 phr (per hundred resin) are non-flammable and rated UL94 V0. The thermal conductivity can be tuned by varying amounts of ATH and glass bubble levels. Curing depth results for selected Examples are shown below in Table 4:

**Table 4. Curing depth measurements.**

| | Ex 1 | Ex 2 | Ex 3 | Ex 9 |
|---|---|---|---|---|
| Depth of cure, mm | >40 | 10.6 | 5.76 | 5.69 |

After 15 s of light exposure (60 mm distance, 450 nm LED Source, 100% power) the maximum temperature of the curing reaction was 63.7°C which is below the threshold of 80°C for batteries.

When subjected to the Torch Test, maximum temperature was 80°C on the opposite side of the sample which complies with the requirements for batteries. EX-9 was tested and did not burn when subjected to a torch flame at 1 100°C.

### Examples EX-10 to EX-15

To measure adhesion to aluminum and polyamide surfaces (PA6), additional Examples EX-10 to EX-15 were prepared and associated properties measured, in accordance with Tables 5 and 6 below. Note that EX-9 was included for comparison.

**Table 5. Composition of potting resins and material properties.**

| | EX-9 | EX-10 | EX-11 | EX-12 | EX-13 | EX-14 | EX-15 |
|---|---|---|---|---|---|---|---|
| CN9002 | 50 | 25 | 50 | 25 | 50 | 50 | 50 |
| 2EHA | 50 | 75 | - | - | 50 | 50 | 50 |
| DDAIB | - | - | 50 | 75 | - | - | - |
| AA | 2 | 2 | 2 | 2 | - | 8 | 2 |
| ATH | 200 | 200 | 200 | 200 | 200 | 200 | 150 |
| E065-135 | - | - | - | - | - | - | 5 |
| K15 | 16 | 16 | 16 | 16 | 16 | 16 | - |
| O-819 | 1 | 1 | 1 | 1 | 1 | 1 | 1 |
| Total | 319 | 319 | 319 | 319 | 317 | 325 | 258 |
| Volume % ATH | 28.6 | 28.6 | 28.6 | 28.6 | 28.6 | 28 | 25.9 |
| Volume % K15 | 36.6 | 36.6 | 36.6 | 36.6 | 36.6 | 35.8 | - |
| Volume % EMS | - | - | - | - | - | - | 31.9 |
| Calculated density, g/cm³ | 1.09 | 1.09 | 1.09 | 1.09 | 1.09 | 1.09 | 1.07 |
| Viscosity @0.1 s⁻¹, Pa-s | 89 | 19.7 | 110.7 | 31.9 | - | - | - |
| Viscosity @1 s⁻¹, Pa-s | 30.3 | 5.5 | 45.9 | 9.1 | - | - | - |
| Viscosity @10 s⁻¹, Pa-s | 18.1 | 3.2 | 30.9 | 5.5 | - | - | - |

**Table 6. Performance properties after curing.**

| | EX-9 | EX-10 | EX-11 | EX-12 | EX-13 | EX-14 | EX-15 |
|---|---|---|---|---|---|---|---|
| Burst Pressure test, kPa | 200 | 200 | 200 | 200 | - | - | 200 |
| Time to burst, s | 4 | 6 | 6 | 4 | - | - | 3 |
| Tensile strength, Mpa | 1.04 | 0.57 | 0.94 | 0.65 | - | - | 0.63 |
| Elongation at break, % | 4 | 8.89 | 4.6 | 7.21 | - | - | 8.03 |
| Thermal conductivity, W/(m-K) | 0.42 | 0.42 | 0.43 | 0.4 | - | - | - |
| UL 94 burn time after 1^{st} pass, s | 0 | 0 | 0 | 1 | - | - | 3 |
| UL 94 burn time after 2^{nd} pass, s | 4 | 3 | 2 | 5 | - | - | 3 |
| UL94 rating | V0 | V0 | V0 | V0 | - | - | V0 |
| Shore A Hardness | 57 | 43 | 57 | 43 | - | - | - |
| Bend Adhesion to Al | cohesive | cohesive | cohesive | cohesive | adhesive | cohesive | NT |
| Bend Adhesion to PA6 | adhesive | cohesive | adhesive | cohesive | NT | NT | NT |
| Adhesive pull off test on PA6, MPa | 1.24 | 1.52 | 1.61 | 1.43 | NT | NT | NT |

| | | | | | | | |
|---|---|---|---|---|---|---|---|
| NT = not tested | | | | | | | |

As shown in Table 6, adhesion to aluminum was significantly increased when acrylic acid was added to the formulation. Increasing the monomer level (2EHA or DDAIB) from 50 to 75% was found to increase flexibility of the coating and the adhesion to PA6. Even full bending of the PA6 panel did not induce debonding of the EX-10 and EX-12 coatings, while EX-9 and EX-11 showed adhesive failure on the PA6 panel.

### Examples FX-16 to EX-18

To investigate the effect of glass bubble content, the acrylic matrix with the minimal viscosity 25% CN9002, 75% 2EHA was selected to prepare additional Examples. Increasing loading levels of K15 were investigated in Examples EX-16 to EX-18. See Tables 7 and 8 below for composition and associated properties, with EX-10 included as a baseline:

**Table 7. Composition of potting resins and material properties.**

| | Ex 10 | Ex 16 | Ex 17 | Ex 18 |
|---|---|---|---|---|
| CN9002 | 25 | 25 | 25 | 25 |
| 2-EHA | 75 | 75 | 75 | 75 |
| AA | 2 | 2 | 2 | 2 |
| ATH | 200 | 200 | 200 | 200 |
| K15 | 16 | 20 | 24 | 28 |
| 0-819 | 1 | 1 | 1 | 1 |
| Total | 319 | 323 | 327 | 331 |
| Volume % ATH | 28.6 | 26.2 | 24.2 | 22.4 |
| Volume % K15 | 36.6 | 41.9 | 46.4 | 50.3 |
| Calculated density, g/cm³ | 1.09 | 1.02 | 0.95 | 0.89 |
| Viscosity @0.1 s⁻¹, Pa-s | 19.7 | 26.2 | 38.6 | 88.7 |
| Viscosity @1 s⁻¹, Pa-s | 5.5 | 9.1 | 15.2 | 38.1 |
| Viscosity @10 s⁻¹, Pa-s | 3.2 | 5.7 | 10.1 | 21.8 |

**Table 8: Thermal conductivity of potting resins with increased glass bubble content.**

| | EX-10 | EX-16 | EX-17 | EX-18 |
|---|---|---|---|---|
| Thermal conductivity, W/(m-K) | 0.42 | 0.4 | 0.35 | 0.32 |
| Shore A Hardness | 43 | 47 | - | 43 |

### Examples FX-19 to EX-23

An additional set of Examples were prepared, which explore use of a Norrish Type II photoinitiator, namely camphorquinone with an amine synergist. Example EX-19 shows the depth of cure for a representative composition, provided in Table 9. Examples EX-20 to EX-24 represent formulations containing alternative crosslinkers without (meth)acrylic monomers to obtain different Shore A hardnesses. Compositions and associated properties after curing are shown in Table 10 below, with EX-10 included for comparison.

**Table 9. Composition with camphorquinone and depth of cure.**

| | EX-19 |
|---|---|
| CN9002 | 25 |
| 2-EHA | 75 |
| AA | 2 |
| ATH | 200 |
| K15 | 16 |
| Camphorquinone | 1 |
| Ethyl-4-(dimethylamino)benzoate | 1 |
| Total | 319 |
| Depth of cure, mm | 3.05 |

**Table 10. Compositions and Shore A Hardness after Curing**

| | EX-10 | EX-20 | EX-21 | EX-22 | EX-23 | EX-24 |
|---|---|---|---|---|---|---|
| CN9002 | 25 | - | - | - | 25 | 25 |
| CN991 | - | 25 | - | - | - | - |
| CN965 | - | - | 25 | - | - | - |
| CN9210 | - | - | - | 25 | - | - |
| 2-EHA | 75 | 75 | 75 | 75 | - | - |
| SR610 | - | - | - | - | 75 | - |
| SR9003 | - | - | - | - | - | 75 |
| AA | 2 | 2 | 2 | 2 | 2 | 2 |
| ATH | 200 | 200 | 200 | 200 | 200 | 200 |
| K15 | 16 | 16 | 16 | 16 | 16 | 16 |
| O-819 | 1 | 1 | 1 | 1 | 1 | 1 |
| Total | 319 | 319 | 319 | 319 | 319 | 319 |
| Shore A Hardness | 43 | 60 | 57 | 91 | 88 | 94 |

All cited references, patents, and patent applications in the above application for letters patent are herein incorporated by reference in their entirety in a consistent manner. In the event of inconsistencies or contradictions between portions of the incorporated references and this application, the information in the preceding description shall control. The preceding description, given in order to enable one of ordinary skill in the art to practice the claimed disclosure, is not to be construed as limiting the scope of the disclosure, which is defined by the claims and all equivalents thereto.

## Claims

1. A light-curable composition comprising:
optionally, one or more monofunctional (meth)acrylate monomers;
a crosslinker selected from multifunctional oligomeric (meth)acrylates, aliphatic urethane (meth)acrylates, aromatic urethane (meth)acrylates, polyester (meth)acrylates, and epoxy (meth)acrylates;
one or more adhesion promoters selected from glycidyl (meth)acrylate, 2-hydroxyethyl(meth)acrylate acid phosphate, phosphonate ester-containing (meth)acrylic monomer, phosphate ester-containing (meth)acrylic monomer, silane, and (meth)acrylic acid;
a photoinitiator;
a flame retardant;
one or more hollow fillers, optionally comprised of glass bubbles, expanded polymeric bubbles, or a mixture thereof; and
optionally, one or more solid fillers comprised of oxides, hydroxides, clays, fumed silica, or a mixture thereof.

2. The composition of claim 1, wherein the one or more monofunctional (meth)acrylate monomers comprises one or more of 2-ethylhexyl (meth)acrylate, isobornyl (meth)acrylate, isooctyl (meth)acrylate, and methyl (meth)acrylate.

3. The composition of claim 1 or 2, wherein the one or more adhesion promoters includes a silane present in an amount of from 0.25 percent to 10 percent by weight relative to the overall weight of the light-curable composition.

4. The composition of any one of claims 1-3, wherein the one or more adhesion promoters includes one or more of glycidyl (meth)acrylate, 2-hydroxyethyl (meth)acrylate acid phosphate, phosphonate ester-containing (meth)acrylic monomer, phosphate ester-containing (meth)acrylic monomer or (meth)acrylic acid present in an amount of from 0.5 percent to 20 percent by weight relative to the overall weight of the light-curable composition.

5. The composition of any of claims 1-4, wherein the flame retardant comprises a metal hydroxide, aluminum trihydride, magnesium hydroxide, borate, huntite, hydromagnesite, carbonate, talc, halogenated flame retardant, antimony trioxide, phosphorus-based flame retardant, expandable graphite, clay, or combination thereof.

6. The composition of any one of claims 1-5, wherein the flame retardant is present in an amount of from 15 percent to 70 percent by weight relative to the overall weight of the light-curable composition.

7. The composition of any one of claims 1-6, wherein the cured composition has a V0 UL94 rating.

8. The composition of any one of claims 1-7, wherein the cured composition provides thermal protection at a 1 100°C torch flame for more than 20 seconds.

9. A method of making a battery assembly comprising a plurality of electrolytic cells having respective electrode surfaces, and a top plate disposed on the plurality of electrolytic cells, the top plate having a plurality of apertures registered with the electrode surfaces, the method comprising:
applying the composition of any of claims 1-8 through the plurality of apertures and onto the electrode surfaces; and
curing the light-curable composition using actinic radiation to form a protective coating extending over the electrode surfaces.

10. The method of claim 9, wherein the composition is applied onto the electrode surfaces using a doctor blade, single dispenser, multichannel dispenser, spraying, dipping, or extrusion coating.

11. The method of claim 10, wherein applying the composition onto the electrode surfaces comprises applying the light-curable composition onto the top plate and electrode surfaces collectively, then wiping excess light-curable composition from the top plate using the doctor blade.

12. A method of making a battery assembly comprising a plurality of electrolytic cells, each having a respective electrode surface and venting port, the method comprising:
for each electrolytic cell, applying the composition of any of claims 1-8 onto the electrode surface and/or venting port; and
curing the light-curable composition using actinic radiation to form protective coatings that extend over the electrode surfaces and/or venting ports.

13. A battery assembly made using the method of any one of claims 9-12.

14. The battery assembly of claim 13, wherein the cured composition is non-flammable and displays a burst pressure of at most 200 kilopascals.

15. The battery assembly of claim 13 or 14, wherein the cured composition has a thickness of from 0.2 millimeters to 10 millimeters.
